# EUROPEAN PATENT SPECIFICATION

(11) **EP 3 029 883 B1**
(45) Date of publication and mention of the grant of the patent: **06.09.2017**
(21) Application number: 14841528.4
(22) Date of filing: 09.09.2014
(51) Int. Cl.: H04L 12/24, H04L 12/437

(54) **NETWORK PROTECTION METHOD AND APPARATUS, NEXT-RING NODE, AND SYSTEM**
NETZWERKSCHUTZVERFAHREN UND VORRICHTUNG, NEXT-RING-KNOTEN UND SYSTEM
PROCÉDÉ ET APPAREIL DE PROTECTION DE RÉSEAU, NOEUD D'ANNEAU SUIVANT ET SYSTÈME

(30) Priority: 09.09.2013 CN 201310408390
(43) Date of publication of application: 08.06.2016
(73) Proprietor: Huawei Technologies Co., Ltd., Longgang District Shenzhen, Guangdong 518129 (CN)
(72) Inventor: CAI, Hengguang, Shenzhen Guangdong 518129 (CN)
(74) Representative: Epping - Hermann - Fischer
(86) International application number: PCT/CN2014/086097
(87) International publication number: WO 2015/032356

(56) References cited:
- EP-A1- 1 863 230
- EP-A2- 2 624 590
- WO-A1-2013/064027
- CN-A- 101 364 926
- CN-A- 101 702 658
- CN-A- 102 355 400
- CN-A- 102 355 400
- CN-A- 103 490 921

## Description

### TECHNICAL FIELD

The present invention relates to the field of communications, and in particular, to a network protection method and apparatus, an off-ring node and a system.

### BACKGROUND

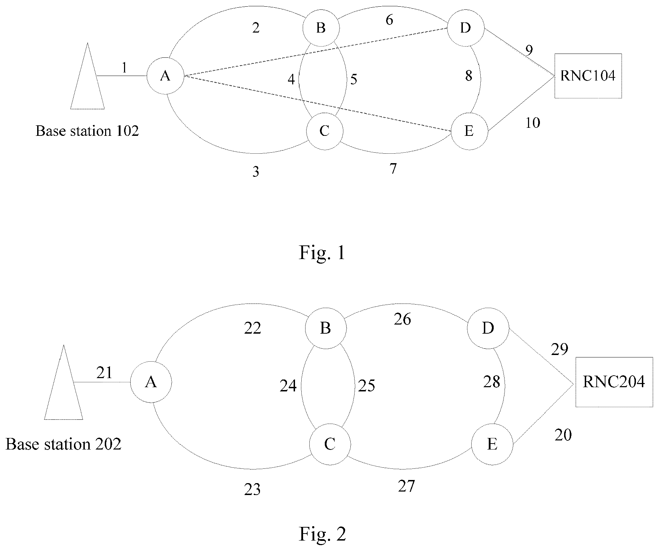

Service data is usually transmitted from a source node to a sink node through several network elements and links between adjacent network elements. To ensure that the service data may still arrive at the sink node in the case of failure of a network element or a link, network protection is generally performed by adopting ring network protection and/or dual-homing protection. The European patent application EP2624590 discloses an interconnected ring protection apparatus and an interconnected ring protection system, which may improve the bandwidth utilization rate. Referring to Fig. 1, it shows a structural schematic diagram of a transmission network adopting both the ring network protection and the dual-homing protection. The transmission network includes a base station 102, an access network element A, a transmission network element B, a transmission network element C, an off-ring node D, an off-ring node E and an RNC (Radio Network Controller, radio network controller) 104, wherein the base station 102 is connected with the access network element A through an access link 1; the access network element A is connected with the transmission network element B through a transmission link 2, and the access network element A is connected with the transmission network element C through a transmission link 3; the transmission network element B is connected with the transmission network element C through transmission links 4 and 5, and the transmission network element B is connected with the off-ring node D through a transmission link 6; the transmission network element C is connected with the off-ring node E through a transmission link 7; the off-ring node D is connected with the off-ring node E through a transmission link 8; the off-ring node D is connected with the RNC 104 through an AC (Attachment circuit, attachment circuit) link 9, and the off-ring node E is connected with the RNC 104 through an AC link 10. The access network element, the transmission network elements, the transmission links and the off-ring nodes belong to a network side, and the network side may be an MPLS (Multi-Protocol Label Switching, multi-protocol label switching) network; the AC links and the RNC belong to an AC side. Specifically:

To deal with possible multipoint failures of the transmission network elements and the transmission links, the above-mentioned transmission network is provided with the ring network protection. The access network element A, the transmission link 2, the transmission network element B, the transmission link 5, the transmission network element C and the transmission link 3 form a first ring network; the transmission network element B, the transmission link 4, the transmission network element C, the transmission link 7, the off-ring node E, the transmission link 8, the off-ring node D and the transmission link 6 form a second ring network. A clockwise direction may be a normal working direction and a counterclockwise direction may be a protection working direction by default on each ring network. That is, in a normal working state, a transmission path of service data is "base station-> A-> B-> D-> RNC", but in the case of failure of one transmission network element or transmission link on the ring network, the working direction on the ring network will be switched, for example, the transmission network element B is faulty, both the two ring networks will be switched, and in this case, the transmission path of the service data is "base station->A->C->E->D->RNC". However, the ring network protection cannot deal with the case that an off-ring nodes or an AC link are faulty. The off-ring node refers to a node in which the service data do not need to be further forwarded on the network side when arriving at the node and need to skip out the network side from the node to the AC side.

To deal with possible failures of the off-ring nodes or the AC links, the RNC 104 is connected with both of the two off-ring nodes to form dual-homing protection. The implementation of the dual-homing protection requires that network side dual-homing technology (shown by dashed lines in the figure) to which the off-ring node D and the off-ring node E belong and AC side dual-homing technology to which the AC links belong cooperate each other. Taking it as an example that the off-ring node D is a main node and the off-ring node E is a standby node, the access network element A respectively establishes PW (Pseudo Wire, virtual path) channels with the off-ring nodes D, E and is provided with OAM (operation administration and maintenance, operation administration and maintenance) detection, and in a normal state, the transmission path of the service data is "base station -> A-> B-> D-> RNC". When the main off-ring node D or the AC link 9 is faulty, main-standby switching occurs, the PW channel between A and E, the off-ring node E and the AC link 10 transmit the service data to the RNC 104, and in this case, the transmission path of the service data is "base station->A->C->E->RNC".

It should be noted that since the ring network protection and the dual-homing protection coexist, the above-mentioned transmission network needs to be configured with a holdoff (holdoff) time, and the holdoff time is a delay time manually set for coordinating the dual-homing protection and the ring network protection. In other words, for the entire transmission network, when a certain ring network link (e.g., the transmission link 9) is faulty, both the ring network protection and the dual-homing protection of the network side may trigger switching, which can result in unnecessary chaos of the entire transmission network, such that the dual-homing protection triggers switching only when a failure message is received and the failure is not eliminated after the holdoff time.

In a process of achieving the present invention, the inventor finds that at least the following problems exist in the prior art:
first, the holdoff time is generally larger than 100ms, thus failing to satisfy the requirement that the holdoff time should be guaranteed to be less than 50ms in a telecommunication network; and
second, the dual-homing protection requires that each service needs to be provided with two sets of OAMs for detecting the failure of a dual-homing node, and in the case of numerous services, a large number of OAM resources and bandwidths need to be consumed, for example, if there are 1000 services, 2000 sets of resources needs to be consumed.

### SUMMARY

To solve the problems that, when ring network protection and dual-homing protection coexist, a longer holdoff time needs to be configured, and that the dual-homing protection needs to consume more OAM resources, embodiments of the present invention provide a network protection method and apparatus, an off-ring node and a system. The technical solutions are as follows:

According to a first aspect of the present invention, provided is a network protection method, applied to any of two off-ring nodes connected with a same access device on a ring network provided with ring network protection, the method including:
obtaining service configuration information of the other off-ring node;
when receiving service data, detecting whether service configuration information carried in the service data is matched with service configuration information of the other off-ring node; and
if the detection result is that the service configuration information carried in the service data is matched with the service configuration information of the other off-ring node, deciding that an off-ring policy of the service data includes:
   performing an off-ring operation of the service data at the current off-ring node, and/or sending the service data to the other off-ring node to perform an off-ring operation.

In a first possible implementation of the first aspect, the obtaining service configuration information of the other off-ring node includes:
obtaining the service configuration information of the other off-ring node from the other off-ring node; or
obtaining the service configuration information of the other off-ring node from a network management system of the ring network.

In combination with the first possible implementation of the first aspect, in a second possible implementation, the obtaining the service configuration information of the other off-ring node from the other off-ring node includes:
receiving the service configuration information of the other off-ring node sent by the other off-ring node through a preset channel, wherein the preset channel is a channel established between the current off-ring node and the other off-ring node in advance;
   or
receiving the service configuration information of the other off-ring node sent by the other off-ring node through an extension message of an operation administration and maintenance OAM mechanism on the ring network.

In combination with the first aspect, the first possible implementation of the first aspect or the second possible implementation of the first aspect, in a third possible implementation, in the case where the deciding that an off-ring policy of the service data includes performing an off-ring operation of the service data at the current off-ring node, before the deciding that an off-ring policy of the service data includes performing the off-ring operation of the service data at the current off-ring node, the method further includes:
detecting whether an access link between the current off-ring node and the access device is faulty; and
if a detection result is that the access link is not faulty, executing the step of deciding that the off-ring policy the service data includes performing the off-ring operation of the service data at the current off-ring node.

In combination with the third possible implementation of the first aspect, in a fourth possible implementation, the method further includes:
if the detection result is that the access link is faulty, sending the service data to the other off-ring node to perform the off-ring operation.

In combination with the first aspect, the first possible implementation of the first aspect or the second possible implementation of the first aspect, in a fifth possible implementation, in the case where the deciding that an off-ring policy of the service data includes sending the service data to the other off-ring node to perform the off-ring operation, before the deciding that an off-ring policy of the service data includes sending the service data to the other off-ring node to perform the off-ring operation, the method further includes:
detecting whether the other off-ring node is reachable; and
if the detection result is that the other off-ring node is reachable, executing the step of deciding that the off-ring policy includes sending the service data to the other off-ring node to perform the off-ring operation.

In combination with the fifth possible implementation of the first aspect, in a sixth possible implementation, the detecting whether the other off-ring node is reachable includes:
detecting whether the other off-ring node is reachable through an operation administration and maintenance OAM mechanism on the ring network; or
determining whether the other off-ring node is reachable by detecting whether a preset channel is normal, wherein the preset channel is a channel established between the current off-ring node and the other off-ring node in advance; or
determining whether the other off-ring node is reachable by receiving a message sent by the other off-ring node through a preset channel, wherein the preset channel is a channel established between the current off-ring node and the other off-ring node in advance.

According to a second aspect of the present invention, provided is a network protection apparatus applied to any of two off-ring nodes connected with a same access device on a ring network provided with ring network protection, the apparatus including:
an information obtaining module, configured to obtain service configuration information of the other off-ring node;
a data detecting module configured to, when receiving service data, detect whether service configuration information carried in the service data is matched with service configuration information of the other off-ring node; and
a policy deciding module configured to, if the detection result is that the service configuration information carried in the service data is matched with the service configuration information of the other off-ring node, decide that an off-ring policy of the service data includes:
   performing an off-ring operation of the service data at the current off-ring node, and/or sending the service data to the other off-ring node to perform an off-ring operation.

In a first possible implementation of the second aspect, the information obtaining module includes: a first obtaining unit or a second obtaining unit;
the first obtaining unit is configured to obtain the service configuration information of the other off-ring node from the other off-ring node; and
the second obtaining unit is configured to obtain the service configuration information of the other off-ring node from a network management system of the ring network.

In combination with the first possible implementation of the second aspect, in a second possible implementation, the first obtaining unit is configured to:
receive the service configuration information of the other off-ring node sent by the other off-ring node through a preset channel, wherein the preset channel is a channel established between the current off-ring node and the other off-ring node in advance;
   or
receive the service configuration information of the other off-ring node sent by the other off-ring node through an extension message of an operation administration and maintenance OAM mechanism on the ring network.

In combination with the second aspect, the first possible implementation of the second aspect or the second possible implementation of the second aspect, in a third possible implementation, the network protection apparatus further includes: a link detecting module;
the link detecting module is further configured to detect whether an access link between the current off-ring node and the access device is faulty; and
the policy deciding module is configured to, if a detection result of the link detecting module is that the access link is not faulty, execute the step of deciding that the off-ring policy of the service data includes performing the off-ring operation of the service data at the current off-ring node.

In combination with the third possible implementation of the second aspect, in a fourth possible implementation, the policy deciding module is further configured to, if the detection result is that the access link has failure, send the service data to the other off-ring node to perform the off-ring operation.

In combination with the second aspect, the first possible implementation of the second aspect or the second possible implementation of the second aspect, in a fifth possible implementation, the network protection apparatus further includes: an opposite end detecting module;
the opposite end detecting module is configured to detect whether the other off-ring node is reachable; and
the policy deciding module is configured to, if the detection result is that the other off-ring node is reachable, execute the step of deciding that the off-ring policy includes sending the service data to the other off-ring node to perform the off-ring operation.

In combination with the fifth possible implementation of the second aspect, in a sixth possible implementation, the opposite end detecting module is configured to:
detect whether the other off-ring node is reachable through an operation administration and maintenance OAM mechanism on the ring network; or
determine whether the other off-ring node is reachable by detecting whether a preset channel is normal, wherein the preset channel is a channel established between the current off-ring node and the other off-ring node in advance; or
determine whether the other off-ring node is reachable by receiving a message sent by the other off-ring node through a preset channel, wherein the preset channel is a channel established between the current off-ring node and the other off-ring node in advance.

According to a third aspect of the present invention, provided is an off-ring node, which includes the network protection apparatus in any of the above second aspect and various possible implementations.

According to a fourth aspect of the present invention, provided is a network system, including a ring network provided with ring network protection and two off-ring nodes connected with a same access device on the ring network; and
the off-ring node is the off-ring node in the above-mentioned third aspect.

The technical solutions provided by the embodiments of the present invention have the following beneficial effects:

By obtaining the service configuration information of the other off-ring node by one of the two off-ring nodes, when receiving the service data, detecting whether the service configuration information carried in the service data is matched with the service configuration information of the other off-ring node, and if the detection result is yes, deciding the off-ring policy of the service data, the problems that when the ring network protection and the dual-homing protection coexist, a longer holdoff time needs to be configured, and that the dual-homing protection needs to consume more OAM resources are solved; in the case where the dual-homing protection does not need to be specially provided and only the ring network protection needs to be provided, the protection effect same as that of the dual-homing protection may be achieved by the two off-ring nodes on the ring network voluntarily deciding the off-ring policy when receiving the service data of the opposite end off-ring node. Moreover, since the dual-homing protection does not need to be specially deployed and only the ring network protection needs to be deployed, only one set of OAM based on the ring network needs to be operated, and thus very few OAM resources are occupied. And, for data of one service, only one PW channel needs to be established, instead of establishing both a main PW channel and a standby PW channel for data of the service, and thus transmission resources are saved.

### BRIEF DESCRIPTION OF DRAWINGS

To illustrate technical solutions in embodiments of the present invention more clearly, a brief introduction to the accompanying drawings which are needed in the description of the embodiments is given below. Apparently, the accompanying drawings in the description below are merely some of the embodiments of the present invention, based on which other drawings may be obtained by those of ordinary skill in the art without any creative effort.
Fig. 1 is a structural schematic diagram of a transmission network in both ring network protection and dual-homing protection is adopted;
Fig. 2 is a structural schematic diagram of an implementation environment involved in a network protection method provided by some embodiments of the present invention;
Fig. 3 is a method flow diagram of a network protection method provided by an embodiment of the present invention;
Fig. 4A is a method flow diagram of a network protection method provided by another embodiment of the present invention;
Fig. 4B is a schematic diagram of implementation of the network protection method provided by the embodiment shown in Fig. 4A;
Fig. 5 is a structural schematic diagram of an implementation environment involved in a network protection method provided by other embodiments of the present invention;
Fig. 6A is a method flow diagram of a network protection method provided by another embodiment of the present invention;
Fig. 6B is a schematic diagram of implementation of the network protection method provided by the embodiment shown in Fig. 6A;
Fig. 7 is a structural block diagram of a network protection apparatus provided by an embodiment of the present invention;
Fig. 8 is a structural block diagram of a network protection apparatus provided by another embodiment of the present invention; and
Fig. 9 is a structural block diagram of an off-ring node provided by an embodiment of the present invention.

### DETAILED DESCRIPTION

In order that the objectives, technical solutions and advantages of the present invention are clearer, a further detailed description of the present invention will be given below in conjunction with the accompanying drawings.

Referring to Fig. 2, it shows a structural schematic diagram of an implementation environment involved in a network protection method provided by some embodiments of the present invention. The implementation environment includes a ring network with ring network protection deployed but without traditional dual-homing protection deployed, and two off-ring nodes D and E connected with a same access device RNC 204 on the ring network. In the implementation environment, the two off-ring nodes D and E are used for achieving the functions of the traditional dual-homing protection.

The implementation environment further includes a base station 202, a network element A, a network element B and a network element C, wherein:
the base station 202 is connected with the network element A through an access link 21; the network element A is connected with the network element B through a transmission link 22, and the network element A is connected with the network element C through a transmission link 23; the network element B is connected with the network element C through transmission links 24 and 25, and the network element B is connected with the off-ring node D through a transmission link 26; the network element C is connected with the off-ring node E through a transmission link 27; the off-ring node D is connected with the off-ring node E through a transmission link 28; the off-ring node D is connected with the RNC 204 through an AC (Attachment circuit, attachment circuit) link 29, and the off-ring node E is connected with the RNC 204 through an AC link 20.

The network element A, the network element B and the network element C as well as the links among the three network elements form a ring network with the ring network protection deployed; the network element B, the network element C, the off-ring node D, and the off-ring node E as well as the links among the four network elements form the foregoing ring network with the ring network protection deployed, but without traditional dual-homing protection deployed. The off-ring node D and the off-ring node E may be device entities and may also be logic entities inside the device.

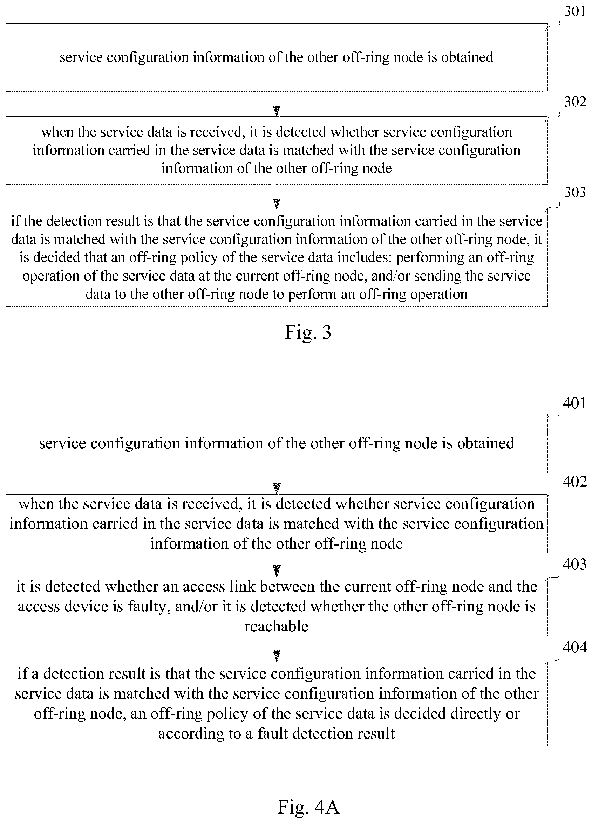

Referring to Fig. 3, it shows a method flow diagram of a network protection method provided by an embodiment of the present invention. The embodiment is illustrated by taking it as an example that the network protection method is applied to any of the two off-ring nodes as shown in Fig. 2. The network protection method includes:
Step 301, service configuration information of the other off-ring node is obtained.

The current off-ring node needs to obtain the service configuration information of the other off-ring node D, the service configuration information includes transmission information of service data and off-ring information of the service data, and in an MPLS network, the service configuration information may include a Tunnel (Tunnel) label or a PW label.

Taking it as an example that the off-ring node D is a default working node, the service data is off-ring at the off-ring node D by default, the network element A will establish a PW channel with the off-ring node D, and the off-ring node E obtains the service configuration information of the off-ring node D in advance.

Step 302, when the service data is received, it is detected whether service configuration information carried in the service data is matched with the service configuration information of the other off-ring node.

Under normal circumstances, the service data which needs to be off ring at the other off-ring node will be directly transmitted to the other off-ring node without passing the current off-ring node. However, when a link on the ring network is faulty or when the other off-ring node is faulty, ring network switching will occur, and the service data which needs to be off ring at the other off-ring node will pass the current off-ring node when being transmitted, in this case, when receiving the service data, the current off-ring node detects whether service configuration information carried in the service data is matched with the service configuration information of the other off-ring node.

For example, service data needs to be off ring at the off-ring node D by default, and under normal circumstances, will be transmitted to the off-ring node D through a path A->B->D to perform an off-ring operation. However, if the transmission link 26 between the network element B and the off-ring node D or the off-ring node D is faulty, ring network switching will occur in the ring network formed by the network element B, the network element C, the off-ring node D, the off-ring node E and the links among the four network elements, in this case, the service data will be transmitted through a path A->B->C->E->D, and the off-ring node E will receive the service data. When receiving the service data, the off-ring node E will detect whether service configuration information carried in the service data is matched with the service configuration information of the other off-ring node, and if the detection result is yes, it indicates that the service data are service data which are off-ring at the off-ring node D.

Step 303, if the detection result is that the service configuration information carried in the service data is matched with the service configuration information of the other off-ring node, it is decided that an off-ring policy of the service data includes: performing an off-ring operation of the service data at the current off-ring node, and/or sending the service data to the other off-ring node to perform the off-ring operation.

If the detection result of the current off-ring node is that the service configuration information carried in the service data is matched with the service configuration information of the other off-ring node, the off-ring node decides that the off-ring policy of the service data is:
performing an off-ring operation of the service data at the current off-ring node; or
sending an service data to the other off-ring node to perform the off-ring operation; or
performing an off-ring operation of the service data at the current off-ring node, and sending the service data to the other off-ring node to perform an off-ring operation.

To sum up, in the network protection method provided by the embodiment, by obtaining the service configuration information of the other off-ring node by one of the two off-ring nodes, when receiving the service data, detecting whether the service configuration information carried in the service data is matched with the service configuration information of the other off-ring node, and if the detection result is yes, deciding the off-ring policy of the service data, the problems that when the ring network protection and the dual-homing protection coexist, a longer holdoff time needs to be configured, and that the dual-homing protection needs to consume more OAM resources are solved; in the case where the dual-homing protection does not need to be specially provided and only the ring network protection needs to be provided, the protection effect same as that of the dual-homing protection may be achieved by the two off-ring nodes on the ring network voluntarily deciding the off-ring policy when receiving the service data of which the off-ring operation is performed at the opposite end off-ring node by default. Moreover, since the dual-homing protection does not need to be specially deployed and only the ring network protection needs to be deployed, only one set of OAM based on the ring network needs to be operated, and thus very few OAM resources are occupied. And, for data of one service, only one PW channel needs to be established, instead of establishing both a main PW channel and a standby PW channel for data of each service, and thus transmission resources are saved.

Referring to Fig. 4A, it shows a method flow diagram of a network protection method provided by another embodiment of the present invention. The embodiment is illustrated by taking it as an example that the network protection method is applied to any of the two off-ring nodes as shown in Fig. 2. The network protection method includes:
Step 401, service configuration information of the other off-ring node is obtained.

The current off-ring node needs to obtain the service configuration information of the other off-ring node, the service configuration information includes transmission information of service data and off-ring information of the service data, and in an MPLS network, the service configuration information may include a Tunnel (Tunnel) label or a PW label. That is, the off-ring node D needs to obtain service configuration information of the off-ring node E, and the off-ring node E needs to obtain service configuration information of the off-ring node D.

Taking it as an example that the off-ring node D is a default working node, the service data is off-ring at the off-ring node D by default, the network element A will establish a PW channel with the off-ring node D, and the off-ring node E obtains service configuration information of the off-ring node D in advance.

Specifically, the step may be implemented in any of the following two implementations:
1) The current off-ring node obtains the service configuration information of the other off-ring node from the other off-ring node.

When a preset channel exists between the current off-ring node and the other off-ring node, the current off-ring node receives the service configuration information of the other off-ring node sent by the other off-ring node through the preset channel, and the preset channel is a channel established between the current off-ring node and the other off-ring node in advance. For example, a preset channel is established between the off-ring node D and the off-ring node E in advance, the preset channel is generally carried on the transmission link 28, the off-ring node D sends the service configuration information thereof to the off-ring node E through the preset channel, and the off-ring node E receives the service configuration information of the off-ring node D through the preset channel; and the off-ring node E also sends the service configuration information thereof to the off-ring node D through the preset channel, and the off-ring node D receives the service configuration information of the off-ring node E through the preset channel.

When no preset channel exists between the current off-ring node and the other off-ring node, the current off-ring node receives the service configuration information of the other off-ring node sent by the other off-ring node through an extension message of an OAM mechanism on the ring network. For example, the off-ring node D sends the service configuration information thereof to the off-ring node E through the extension message of the OAM mechanism on the ring network, and the off-ring node E receives the service configuration information of the off-ring node D through the extension message; the off-ring node E sends the service configuration information thereof to the off-ring node D through the extension message of the OAM mechanism on the ring network, and the off-ring node D receives the service configuration information of the off-ring node E through the extension message.
2) The current off-ring node obtains the service configuration information of the other off-ring node from a network management system of the ring network.

Since the service configuration information of the other off-ring node is issued to the other off-ring node by the network management system (not shown in the figure) in the ring network, the current off-ring node may also obtain the service configuration information of the other off-ring node from the network management system of the ring network. For example, when issuing the service configuration information of the off-ring node D to the off-ring node D, the network management system in the ring network also issues the service configuration information of the off-ring node D to the off-ring node E; when issuing the service configuration information of the off-ring node E to the off-ring node E, the network management system in the ring network also issues the service configuration information of the off-ring node E to the off-ring node D.

Step 402, when the service data is received, it is detected whether service configuration information carried in the service data is matched with the service configuration information of the other off-ring node.

Under normal circumstances, the service data which need to be off ring at the other off-ring node can be directly transmitted to the other off-ring node without passing the current off-ring node. However, when a link on the ring network is faulty or when the other off-ring node is faulty, ring network switching will occur, the service data which are off-ring at the other off-ring node will pass the current off-ring node when being transmitted, and in this case, when receiving the service data, the current off-ring node detects whether the service configuration information carried in the service data is matched with the service configuration information of the other off-ring node.

For example, service data needs be off ring at the off-ring node D by default, and under normal circumstances, the service data will be transmitted to the off-ring node D through a path A->B->D to perform an off-ring operation. However, if the transmission link 26 between the network element B and the off-ring node D or the off-ring node D is faulty, ring network switching occurs in the ring network formed by the network element B, the network element C, the off-ring node D, the off-ring node E and the links among the four network elements, in this case, the service data will be transmitted through a path A->B->C->E->D, the off-ring node E will receive the service data. When receiving the service data, the off-ring node E will detect whether service configuration information carried in the service data is matched with the service configuration information of the other off-ring node, and if the detection result is yes, it indicates that the service data is service data which is off-ring at the off-ring node D by default.

Step 403, it is detected whether an access link between the current off-ring node and the access device is faulty, and/or it is detected whether the other off-ring node is reachable.

The current off-ring node detects whether the access link between the current off-ring node and the access device is faulty, and/or the current off-ring node further detects whether the other off-ring node is reachable. The case where the other off-ring node is unreachable may be caused by the failure of the other off-ring node per se or may also be caused by the failure between the two off-ring nodes. Both of the two fault detections may be performed, or only one detection is performed. Taking it as an example that both the two fault detections are performed, namely:
if the off-ring node E is the current off-ring node, the off-ring node E will detect whether the AC link 20 is faulty and detects whether the off-ring node D is reachable; and
if the off-ring node D is the current off-ring node, the off-ring node D will detect whether the AC link 29 is faulty and detects whether the off-ring node E is reachable.

When the current off-ring node detects whether the access link between the current off-ring node and the access device is faulty, the current off-ring node may also detect whether a failure occurs through an AC fault detection mechanism on the access link.

That the current off-ring node detects whether the other off-ring node is reachable, may be implemented in any of the following three ways:
1) The current off-ring node detects whether the other off-ring node is reachable through the OAM mechanism on the ring network; and
   the OAM mechanism on the ring network will alarm the other off-ring node when one off-ring node is unreachable.
2) The current off-ring node determines whether the other off-ring node is reachable by detecting whether a preset channel is normal, wherein the preset channel is a channel established between the current off-ring node and the other off-ring node in advance; and
   when a preset channel exists between the current off-ring node and the other off-ring node, the current off-ring node determines whether the other off-ring node is reachable by detecting whether the preset channel is normal, and determines that the other off-ring node is reachable, if the preset channel is normal; and determines that the other off-ring node is unreachable, if the preset channel is abnormal. It should be noted that the case that the preset channel is abnormal is not entirely caused by the failure of the other off-ring node and may also be caused by the failure of a transmission link carrying the preset channel, and in these cases, it is considered that the other off-ring node is unreachable.
3) It is determined whether the other off-ring node is reachable by receiving a message sent by the other off-ring node through a preset channel, wherein the preset channel is a channel established between the current off-ring node and the other off-ring node in advance.

When a preset channel exists between the current off-ring node and the other off-ring node, the current off-ring node may also determine whether the other off-ring node is reachable by receiving the message sent by the other off-ring node through the preset channel, and determines that the other off-ring node is reachable if receiving a normal message periodically sent by the other off-ring node; and determines that the other off-ring node is unreachable if not receiving a normal message periodically sent by the other off-ring node or if receiving an abnormal message sent by the other off-ring node. For example, the off-ring node D finds that the access link 29 is faulty, and it may send the abnormal message to the off-ring node E, and the off-ring node E determines that the off-ring node D is unreachable when receiving the abnormal message.

Step 404, if a detection result is that service configuration information carried in the service data is matched with the service configuration information of the other off-ring node, an off-ring policy of the service data is decided directly or according to a fault detection result; and
the current off-ring node decides the off-ring policy of the service data, and the service data are service data for which the detection result is that the service configuration information carried in the service data is matched with the service configuration information of the other off-ring node in step 402. Since step 403 is an optional step, the step may be specifically implemented in the following four manners:
1) The current off-ring node directly decides the off-ring policy of the service data;
   in the case where the step 403 is not executed, the current off-ring node directly decides that the off-ring policy of the service data is: performing the off-ring operation of the service data at the current off-ring node, and sending the service data to the other off-ring node to perform the off-ring operation. In this case, the RNC 204 may receive two copies of identical service data, and the RNC 204 selectively receives one copy, for example, storing the service data received at first, and when receiving the same service data, discarding the same.
2) The current off-ring node decides the off-ring policy of the service data according to a fault detection result of the access link;
   if only the fault detection between the current off-ring node and the access device is executed in the step 403, the current off-ring node decides the off-ring policy of the service data according to the fault detection result of the access link:
   if the detection result is that the access link is not faulty, the current off-ring node decides that the off-ring policy of the service data includes: performing an off-ring operation of the service data at the current off-ring node; and
   if the detection result is that the access link is faulty, the current off-ring node decides that the off-ring policy of the service data includes: sending the service data to the other off-ring node to perform an off-ring operation.
3) The current off-ring node decides the off-ring policy of the service data according to a fault detection result of the other off-ring node;
   if only the fault detection of the other off-ring node is executed in the step 403, the current off-ring node decides the off-ring policy of the service data according to the fault detection result of the other off-ring node:
   if the detection result is that the other off-ring node is unreachable, the current off-ring node decides the off-ring policy of the service data includes: performing an off-ring operation of the service data at the current off-ring node; and
   if the detection result is that the other off-ring node is reachable, the current off-ring node decides that the off-ring policy of the service data includes: sending the service data to the other off-ring node to perform an off-ring operation.
4) The current off-ring node decides the off-ring policy of the service data according to two kinds of fault detection results;
   if both of the two kinds of fault detections are executed in the step 403, specifically:
   if the detection result is that the access link on local side is faulty and the other off-ring node is reachable, the current off-ring node decides the off-ring policy includes: sending the service data to the other off-ring node to perform an off-ring operation;
   if the detection result is that the access link on local side is not faulty and the other off-ring node is unreachable, the current off-ring node decides that the off-ring policy includes: performing an off-ring operation of the service data at the current off-ring node; and
   if the detection result is that the access link on local side is not faulty and the other off-ring node is reachable, the current off-ring node decides the off-ring policy includes:
      performing an off-ring operation of the service data at the current off-ring node; or
      sending the service data to the other off-ring node to perform an off-ring operation; or
      performing an off-ring operation of the service data at the current off-ring node, and sending the service data to the other off-ring node to perform an off-ring operation.

If the detection result is that the access link on local side is faulty and the other off-ring node is unreachable, the service data cannot be sent.

It needs to be noted that, besides the service data which is off-ring at the other off-ring node by default and received by the current off-ring node according to the service configuration information of the other off-ring node, the service data which is off-ring at the other off-ring node and received by the current off-ring node according to the service configuration information thereof are also applicable to the off-ring policy decided in the embodiment.

It needs to be further noted that, since the execution sequences of the detection process in the step 403, the step 401 and the step 402 are not limited, in some embodiments, a main-standby relationship may be introduced between the off-ring node D and the off-ring node E. That is:
after the faulty detection process in the step 403, the main-standby relationship between the current off-ring node and the other off-ring node is determined according to the fault detection result; then in the step 404, the current off-ring node decides the off-ring policy according to whether it is a main node or a standby node. In this case, the execution sequences of the detection process in the step 403, the step 401 and the step 402 may be mutually independent.

Taking it as an example that both of the two kinds of fault detections are executed in the step 403, a process of determining the main-standby relationship may include:
in the case where the other off-ring node is reachable and the access link is not faulty, the current off-ring node determines the main-standby relationship between the current off-ring node and the other off-ring node according to a default main-standby relationship; for example, a clockwise direction is a normal working direction in the ring network by default, and when none of the off-ring node D, the off-ring node E, the AC link 29 and the AC link 20 is faulty, the default main-standby relationship is that the off-ring node D is a main node, and the off-ring node E is a standby node.

In the case where the other off-ring node is unreachable, the current off-ring node determines that a main-standby relationship is: the current off-ring node is a main node, and the other off-ring node is a standby node; for example, the off-ring node D is unreachable, then the off-ring node E determines that a main-standby relationship is: the off-ring node E is a main node, and the off-ring node D is a standby node; and as another example, the off-ring node E is unreachable, and then the off-ring node D determines that a main-standby relationship is: the off-ring node D is a main node, and the off-ring node E is a standby node.

In the case where the access link between the current off-ring node and the access device is faulty, the current off-ring node determines that a main-standby relationship is: the current off-ring node is a standby node, and the other off-ring node is a main node. For example, when the AC link 29 is faulty, then the off-ring node D determines that a main-standby relationship is: the off-ring node E is a main node, and the off-ring node D is a standby node; and as another example, when the AC link 20 is faulty, then the off-ring node E determines that the main-standby relationship is: the off-ring node D is a main node, and the off-ring node E is a standby node.

The two off-ring nodes switch the main-standby relationship through a preset channel.

After determining the main-standby relationship, the process of the current off-ring node for deciding the off-ring policy may include:
when the current off-ring node is a main node, the current off-ring node decides the off-ring policy as follows: performing an off-ring operation of the service data at the current off-ring node.

When the current off-ring node is a standby node, the current off-ring node decides that the off-ring policy is: sending the service data to the other off-ring node to perform an off-ring operation.

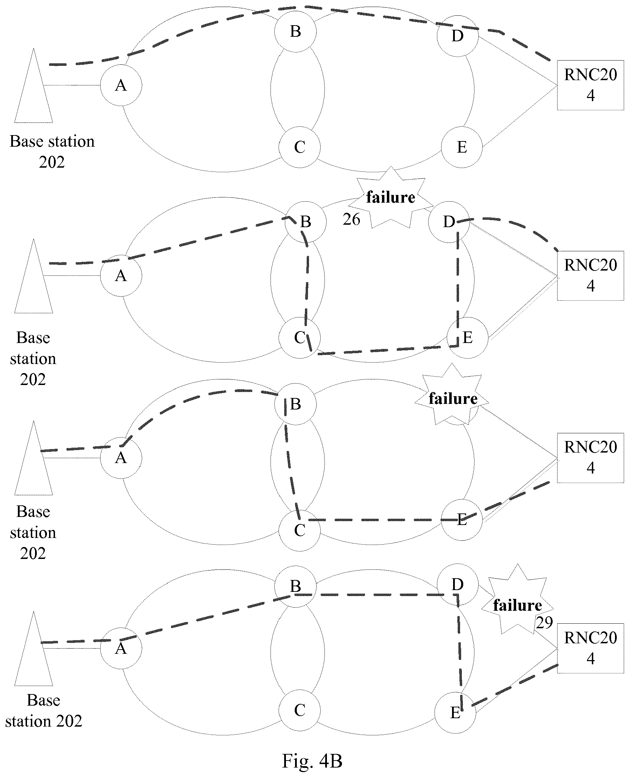

A service data sending process will be described below in conjunction with several specific scenarios, after the main-standby relationship is introduced, and reference is made to Fig. 4B:
in a normal scenario, the clockwise direction is a normal working direction, the off-ring node D is a main node and the off-ring node E is a standby node in the ring network by default, and then the off-ring node D will receive the service data successfully and directly send the service data to the RNC. That is, in this case, the transmission path of the service data sent by the base station 202 to the RNC 204 is: base station 202-> A-> B-> D-> RNC 204.

In the case of failure of the transmission link 26, the network element B will detect the failure through ring network OAM when sending the service data to the off-ring node D, so as to trigger switching of the ring network, but since none of the off-ring node and the AC link is faulty, in this case, the off-ring node D is still a main node and the off-ring node E is still a standby node, therefore the off-ring node E will receive the service data, and the off-ring node E forwards the service data to the off-ring node D, and the off-ring node D sends the service data to the RNC. In this case, the transmission path of the service data sent by the base station 202 to the RNC 204 is: base station 202->A->B->C->E->D->RNC204.

In the case of failure of the off-ring node D, the network element B will detect the failure through the ring network OAM when sending the service data to the off-ring node D, and trigger switching of the ring network, and thus, the off-ring node E will receive the service data. Since the off-ring node E detects that the off-ring node D is unreachable through the ring network OAM and triggers main-standby switch, the off-ring node E becomes a main node, and the off-ring node E directly sends the service data to the RNC according to the off-ring policy. In this case, the transmission path of the service data sent by the base station 202 to the RNC 204 is: base station 202->A->B->C->E-> RNC204.

In the case of failure of the AC link 29, the off-ring node D will detect the failure through the fault detection mechanism on the AC link and trigger a main-standby switch, and the off-ring node D becomes a standby node. The service data sent by the base station are received by the off-ring node D, the off-ring node D forwards the service data to the off-ring node E according to the off-ring policy, and the off-ring node E sends the service data to the RNC. In this case, the transmission path of the service data sent by the base station 202 to the RNC 204 is: base station 202->A->B->D->E-> RNC204.

To sum up, in the network protection method provided by the embodiment, by obtaining the service configuration information of the other off-ring node by one of the two off-ring nodes, when receiving the service data, detecting whether the service configuration information carried in the service data is matched with the service configuration information of the other off-ring node, and if the detection result is yes, deciding the off-ring policy of the service data, the problems that when the ring network protection and the dual-homing protection coexist, a longer holdoff time needs to be configured, and that the dual-homing protection needs to consume more OAM resources are solved; in the case where the dual-homing protection does not need to be specially provided and only the ring network protection needs to be provided, the protection effect same as that of the dual-homing protection may be achieved by the two off-ring nodes on the ring network voluntarily deciding the off-ring policy when receiving the service data of which the off-ring operation is performed at the opposite end off-ring node by default.

Moreover, since the dual-homing protection does not need to be specially deployed and only the ring network protection needs to be deployed, not only are configuration work and maintenance work greatly reduced, but also only one set of OAM based on the ring network needs to operated, thus very few OAM resources are occupied.

And, for data of one service, only one PW channel needs to be established, instead of establishing both a main PW channel and a standby PW channel for data of each service, and transmission resources are saved.

In addition, in different embodiments, the step 403 may not be executed, or only one kind of fault detection is executed or both of the two kind of fault detections are executed, the more the execution categories of the faulty detection mechanism are, the more complex the control logic of the network side is, but more redundant service data may be sent; the fewer the execution Categories of the fault detection mechanism are, the simpler the control logic of the network side is, but less redundant service data may be sent. In specific implementation, different policies may be adopted according to different implementation environments and the calculation capacity of the network side.

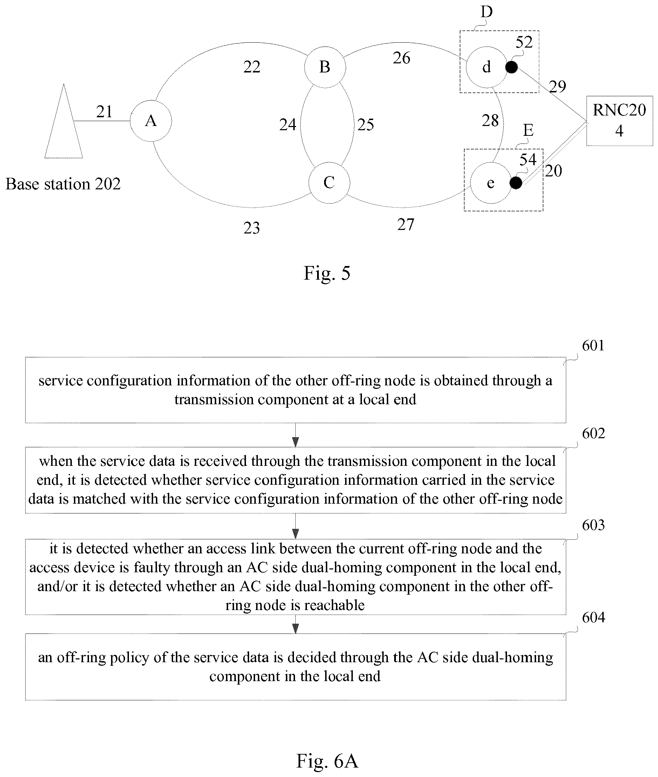

Referring to Fig. 5, it shows a structural schematic diagram of an implementation environment involved in a network protection method provided by other embodiments of the present invention. The implementation environment includes a ring network with ring network protection deployed but without traditional dual-homing protection deployed, and two off-ring nodes D and E connected with a same access device RNC 204 on the ring network, the off-ring node D includes a transmission component d and an AC side dual-homing component 52, and both of the transmission component d and the AC side dual-homing component 52 are logic entities on a device entity to which the off-ring node D belongs; and the off-ring node E includes a transmission component e and an AC side dual-homing component 54, and both of the transmission component e and the AC side dual-homing component 54 are logic entities on a device entity to which the off-ring node E belongs.

The implementation environment further includes a base station 202, a network element A, a network element B and a network element C, wherein:
the base station 202 is connected with the network element A through an access link 21; the network element A is connected with the network element B through a transmission link 22, and the network element A is connected with the network element C through a transmission link 23; the network element B is connected with the network element C through transmission links 24 and 25, and the network element B is connected with the off-ring node D through a transmission link 26; the network element C is connected with the off-ring node E through a transmission link 27; the off-ring node D is connected with the off-ring node E through a transmission link 28; the transmission component d in the off-ring node D is operated on the ring network of the network side, the AC side dual-homing component 52 connected with the transmission component d and an AC (Attachment Circuit, Attachment Circuit) link 29 are connected with the RNC 204, the transmission component e in the off-ring node E is operated on the ring network of the network side, and the AC side dual-homing component 54 connected with the transmission component e and the AC link 20 are connected with the RNC 204. An AC side protocol channel is established between the two AC side dual-homing components, and the AC side protocol channel is generally carried on the transmission link 28.

The network element A, the network element B, the network element C and the links among the three network elements form a ring network, with the ring network protection deployed; and the network element B, the network element C, the off-ring node D, the off-ring node E and the links among the four network elements form the foregoing ring network, with the ring network protection deployed, but without traditional dual-homing protection deployed.

Obviously, different from the implementation environment as shown in Fig. 2, the transmission components in the off-ring node D and the off-ring node E are used for achieving functions of a traditional off-ring node and part of logic steps in the network protection method in the embodiment of the present invention, and the additionally arranged AC side dual-homing components are used for executing main logic steps in the network protection method in the embodiment of the present invention.

Referring to Fig. 6A, it shows a method flow diagram of a network protection method provided by another embodiment of the present invention. The embodiment is illustrated by taking it as an example that the network protection method is applied to any of the two off-ring nodes as shown in Fig. 5. The network protection method includes:
step 601, service configuration information of the other off-ring node is obtained through a transmission component at a local end.

The current off-ring node needs to obtain the service configuration information of the other off-ring node through the transmission component in the local end, the service configuration information includes transmission information and off-ring information of service data, and in an MPLS network, the service configuration information may include a Tunnel (Tunnel) label or a PW label. That is, the transmission component d in the off-ring node D needs to obtain the service configuration information of the transmission component e in the off-ring node E, and the transmission component e in the off-ring node E needs to obtain the service configuration information of the transmission component d in the off-ring node D.

Taking it as an example that the off-ring node D is a default working node, the service data is off-ring at the off-ring node D by default, the network element A will establish a PW channel with the transmission component in the off-ring node D, and the transmission component in the off-ring node E obtains the service configuration information of the off-ring node D in advance.

Specifically, the step may be implemented in any of the following two ways:
1) the transmission component in the local end obtains the service configuration information of the other off-ring node from the other off-ring node.

When a preset channel exists between the current off-ring node and the other off-ring node, the transmission component in the current off-ring node receives the service configuration information of the other off-ring node sent by the transmission component in the other off-ring node through a preset channel, and the preset channel is a channel established between the current off-ring node and the other off-ring node in advance. For example, a preset channel is established between the off-ring node D and the off-ring node E in advance, the preset channel is generally borne on the transmission link 28, the transmission component d sends the service configuration information thereof to the transmission component e through the preset channel, and the transmission component e receives the service configuration information of the off-ring node D through the preset channel; and the transmission component e also sends the service configuration information thereof to the transmission component d through the preset channel, and the transmission component d receives the service configuration information of the off-ring node E through the preset channel.

When no preset channel exists between the current off-ring node and the other off-ring node, the transmission component in the current off-ring node receives the service configuration information of the other off-ring node sent by the transmission component in the other off-ring node through an extension message of an OAM mechanism on the ring network. For example, the transmission component d sends the service configuration information of the off-ring node D to the transmission component e through the extension message of the OAM mechanism on the ring network, and the transmission component e receives the service configuration information of the off-ring node D through the extension message; and the transmission component e sends the service configuration information of the off-ring node E to the transmission component d through the extension message of the OAM mechanism on the ring network, and the transmission component d receives the service configuration information of the off-ring node E through the extension message.
2) The transmission component in the local end obtains the service configuration information of the other off-ring node from a network management system of the ring network.

Since the service configuration information of the other off-ring node is issued to the other off-ring node by the network management system (not shown in the figure) in the ring network, the transmission component in the current off-ring node may also obtain the service configuration information of the other off-ring node from the network management system of the ring network. For example, when issuing the service configuration information of the off-ring node D to the transmission component d in the off-ring node D, the network management system in the ring network also issues the service configuration information of the off-ring node D to the transmission component e in the off-ring node E; and when issuing the service configuration information of the off-ring node E to the transmission component e in the off-ring node E, the network management system in the ring network also issues the service configuration information of the off-ring node E to the transmission component d in the off-ring node D.

Step 602, when the service data is received through the transmission component in the local end, it is detected whether service configuration information carried in the service data is matched with the service configuration information of the other off-ring node.

Under normal circumstances, the service data which needs to be off ring at the other off-ring node will be directly transmitted to the other off-ring node without passing the current off-ring node. However, when a link on the ring network is faulty or when the other off-ring node is faulty, ring network switching will occur, the service data which needs to be off ring at the other off-ring node will pass the current off-ring node when being transmitted, and in this case, when receiving the service data, the transmission component in the current off-ring node detects whether the service configuration information carried in the service data is matched with the service configuration information of the other off-ring node.

For example, when service data needs to be off ring at the off-ring node D by default, under normal circumstances, the service data will be transmitted to the off-ring node D through a path A->B->D to perform an off-ring operation. However, if the transmission link 26 between the network element B and the off-ring node D or the off-ring node D is faulty, ring network switching will occur in the ring network formed by the network element B, the network element C, the off-ring node D, the off-ring node E and the links among the four network elements, in this case, the service data will be transmitted through a path A->B->C->E->D, the transmission component e in the off-ring node E will receive the service data, when receiving the service data, the transmission component e will detect whether the service configuration information carried in the service data is matched with the service configuration information of the other off-ring node, and if the detection result is yes, it indicates that the service data are service data is off-ring at the off-ring node D by default.

Step 603, it is detected whether an access link between the current off-ring node and the access device is faulty through an AC side dual-homing component in the local end, and/or it is detected whether an AC side dual-homing component in the other off-ring node is reachable.

The AC side dual-homing component in the current off-ring node detects whether the access link between the current off-ring node and the access device is faulty, and/or the AC side dual-homing component in the current off-ring node further detects whether the AC side dual-homing component in the other off-ring node is reachable. The case that the AC side dual-homing component in the other off-ring node is unreachable may be caused by the failure of the AC side dual-homing component per se and may also be caused by the failure of the AC side protocol channel between the two AC side dual-homing components. Both of the two fault detections may be performed, or only one detection is performed. Taking it as an example that both of the two fault detections are performed, namely:
if the off-ring node E is the current off-ring node, the AC side dual-homing component 54 in the off-ring node E will detect whether the AC link 20 is faulty and detects whether the AC side dual-homing component 52 in the off-ring node D is reachable; and
if the off-ring node D is the current off-ring node, the AC side dual-homing component 52 in the off-ring node D will detect whether the AC link 29 is faulty and detects whether the AC side dual-homing component 54 in the off-ring node E is reachable.

When the AC side dual-homing component in the current off-ring node detects whether the access link between the current off-ring node and the access device is faulty, the AC side dual-homing component in the current off-ring node may detect whether failure occurs through an AC fault detection mechanism on the access link.

When the AC side dual-homing component in the current off-ring node detects whether the AC side dual-homing component in the other off-ring node is reachable, it can be implemented in any of the following three ways:
1) the AC side dual-homing component in the current off-ring node detects whether the AC side dual-homing component in the other off-ring node is reachable through the OAM mechanism on the ring network.

When the AC side protocol channel between the two AC side dual-homing components is borne on the transmission link 28, the OAM mechanism on the ring network will alarm the AC side dual-homing component in the other off-ring node when the AC side dual-homing component in one off-ring node is unreachable.
2) The AC side dual-homing component in the current off-ring node determines whether the AC side dual-homing component in the other off-ring node is reachable by detecting whether the AC side channel is normal, wherein the AC side channel is a channel established between the AC side dual-homing component in the current off-ring node and the AC side dual-homing component in the other off-ring node in advance.

When the AC side channel exists between the two AC side dual-homing components, the AC side dual-homing component in the current off-ring node determines whether the AC side dual-homing component in the other off-ring node is reachable by detecting whether the AC side channel is normal, and determines that the AC side dual-homing component in the other off-ring node is reachable if the AC side channel is normal; and determines that the AC side dual-homing component in the other off-ring node is unreachable if the AC side channel is abnormal. The case that the AC side channel is abnormal may be caused by the failure of the AC side dual-homing component in the other off-ring node or may also be caused by the failure of the transmission link carrying the AC side channel.
3) The AC side dual-homing component in the current off-ring node determines whether the AC side dual-homing component in the other off-ring node is reachable by receiving a message sent by the AC side dual-homing component in the other off-ring node through an AC side channel, wherein the AC side channel is a channel established between the AC side dual-homing component in the current off-ring node and the AC side dual-homing component in the other off-ring node in advance.

When the AC side channel exists between the two AC side dual-homing components, the AC side dual-homing component in the current off-ring node may also determine whether the AC side dual-homing component in the other off-ring node is reachable by receiving the message sent by the AC side dual-homing component in the other off-ring node through the AC side channel, and determines that the AC side dual-homing component in the other off-ring node is reachable if receiving a normal message periodically sent by the AC side dual-homing component in the other off-ring node; and determines that the AC side dual-homing component in the other off-ring node is unreachable if not receiving a normal message periodically sent by the AC side dual-homing component in the other off-ring node or if receiving an abnormal message sent by the AC side dual-homing component in the other off-ring node. For example, the AC side dual-homing component 52 in the off-ring node D finds that the access link 29 is faulty, and then it may send the abnormal message to the AC side dual-homing component 54 in the off-ring node E, and the AC side dual-homing component 54 in the off-ring node E determines that the AC side dual-homing component 52 in the off-ring node D is unreachable when receiving the abnormal message.

Step 604, an off-ring policy of the service data is decided through the AC side dual-homing component in the local end.

The AC side dual-homing component in the current off-ring node decides the off-ring policy of the service data, and the service data are service data for which the detection result of the transmission component in the current off-ring is that the service configuration information carried in the service data is matched with the service configuration information of the other off-ring node in the step 602. The sending policy includes: performing an off-ring operation of the service data through the AC side dual-homing component in the current off-ring node, and/or performing an off-ring operation of the service data through the AC side dual-homing component in the other off-ring node.

Since the step 603 is an optional step, the implementations of performing the step may specifically include the following four manners:
1) the AC side dual-homing component in the current off-ring node directly decides the off-ring policy of the service data.

In the case where the step 603 is not executed, the AC side dual-homing component in the current off-ring node directly decides that the off-ring policy of the service data is: performing an off-ring operation of the service data through the AC side dual-homing component in the current off-ring node, and performing an off-ring operation of the service data through the AC side dual-homing component in the other off-ring node. In this case, the RNC may receive two copies of identical service data, and the RNC selectively receives one copy, for example, storing the service data received at first, and when receiving the same service data, discarding the same.
2) The AC side dual-homing component in the current off-ring node decides the off-ring policy of the service data according to the fault detection result of the access link.

If only the fault detection of the access link is executed in the step 603, the AC side dual-homing component in the current off-ring node decides the off-ring policy of the service data according to the fault detection result of the access link.

If the detection result is that the access link is not faulty, the AC side dual-homing component in the current off-ring node decides that the off-ring policy of the service data includes: performing an off-ring operation of the service data through the AC side dual-homing component in the current off-ring node.

If the detection result is that the access link is faulty, the AC side dual-homing component in the current off-ring node decides that the off-ring policy of the service data includes: performing an off-ring operation of the service data through the AC side dual-homing component in the other off-ring node.
3) The AC side dual-homing component in the current off-ring node decides the off-ring policy of the service data according to the fault detection result of the AC side dual-homing component in the other off-ring node.

If only the fault detection of the AC side dual-homing component in the other off-ring node is executed in the step 603, the AC side dual-homing component in the current off-ring node decides the off-ring policy of the service data according to the fault detection result of the other off-ring node.

If the detection result is that the AC side dual-homing component in the other off-ring node is faulty, the AC side dual-homing component in the current off-ring node decides that the off-ring policy of the service data includes: performing an off-ring operation of the service data through the AC side dual-homing component in the current off-ring node.

If the detection result is that the AC side dual-homing component in the other off-ring node is not faulty, the AC side dual-homing component in the current off-ring node decides that the off-ring policy of the service data includes: performing an off-ring operation of the service data through the AC side dual-homing component in the other off-ring node.
4) The current off-ring node decides the off-ring policy of the service data according to two fault detection results.

If both of the two fault detections are executed in the step 603, specifically:
if the detection result is that the access link on the local side is faulty and the AC side dual-homing component in the other off-ring node is reachable, the current off-ring node decides that the off-ring policy includes: performing an off-ring operation of the service data through the AC side dual-homing component in the other off-ring node;
if the detection result is that the access link on the home side is not faulty and the AC side dual-homing component in the other off-ring node is unreachable, the current off-ring node decides the off-ring policy includes: performing an off-ring operation of the service data through the AC side dual-homing component in the current off-ring node; and
if the detection result is that the access link on the home side is not faulty and the other off-ring node is reachable, the current off-ring node decides the off-ring policy includes:
   performing an off-ring operation of the service data through the AC side dual-homing component in the current off-ring node; or
   performing an off-ring operation of the service data through the AC side dual-homing component in the other off-ring node; or
   performing an off-ring operation of the service data through the AC side dual-homing component in the current off-ring node, and performing an off-ring operation of the service data through the AC side dual-homing component in the other off-ring node.

If the detection result is that the access link on the home side is faulty and the AC side dual-homing component in the other off-ring node is unreachable, the service data cannot be sent.

It needs to be noted that, besides the service data which is off-ring at the other off-ring node by default and received by the current off-ring node according to the service configuration information of the other off-ring node, the service data which is off-ring at the other off-ring node and received by the current off-ring node according to the service configuration information thereof are also applicable to the off-ring policy decided in the embodiment.

It needs to be further noted that, since the execution sequences of the detection process in the step 603, the step 601 and the step 602 are not limited, in some embodiments, a main-standby relationship may be introduced between the off-ring node D and the off-ring node E. That is:
after the fault detection process in the step 603, a main-standby relationship between the AC side dual-homing component in the current off-ring node and the AC side dual-homing component in the other off-ring node is determined according to the fault detection result; then in the step 604, the AC side dual-homing component in the current off-ring node decides the off-ring policy according to whether it is a main component or a standby component. In this case, the execution sequences of the detection process in the step 603, the step 601 and the step 602 may be mutually independent.

Taking it as an example that both of the two fault detections are executed in the step 603, a process of determining a main-standby relationship may include:
in the case where the AC side dual-homing component in the other off-ring node is reachable and the access link is not faulty, the AC side dual-homing component in the current off-ring node determines the main-standby relationship between the two AC side dual-homing components according to a default main-standby relationship; and for example, the AC side dual-homing component 52 in the off-ring node D is a main component by default.

In the case where the AC side dual-homing component in the other off-ring node is unreachable, the AC side dual-homing component in the current off-ring node determines that the main-standby relationship is: the AC side dual-homing component in the current off-ring node is a main component, and the AC side dual-homing component in the other off-ring node is a standby component; for example, if the AC side dual-homing component 52 in the off-ring node D is unreachable, the AC side dual-homing component 54 in the off-ring node E determines that the main-standby relationship is: the AC side dual-homing component 54 in the off-ring node E is a main component, and the AC side dual-homing component 52 in the off-ring node D is a standby component.

In the case where the access link between the AC side dual-homing component in the current off-ring node and the access device is faulty, the AC side dual-homing component in the current off-ring node determines that a main-standby relationship is: the AC side dual-homing component in the current off-ring node is a standby component, and the AC side dual-homing component in the other off-ring node is a main component. For example, when the AC link 29 is faulty, the AC side dual-homing component 52 in the off-ring node D determines that a main-standby relationship is: the AC side dual-homing component 54 in the off-ring node E is a main component, and the AC side dual-homing component 52 in the off-ring node D is a standby component.

The main-standby relationship between the AC side dual-homing components in the two off-ring nodes is switched through an AC protocol channel.

After determining a main-standby relationship, the process that the AC side dual-homing component in the current off-ring node decides an off-ring policy may include:
when the AC side dual-homing component in the current off-ring node is a main component, the off-ring policy is decided to be: performing an off-ring operation of the service data through the AC side dual-homing component in the current off-ring node.

When the AC side dual-homing component in the current off-ring node is a standby component, the off-ring policy is decided to be: performing an off-ring operation of the service data through the AC side dual-homing component in the other off-ring node.

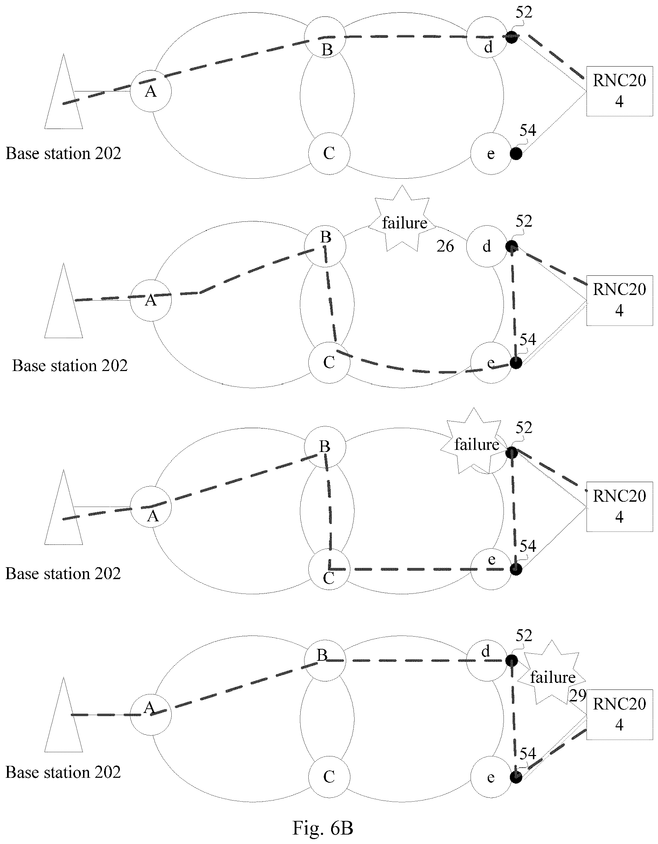

A service data sending process will be described below in conjunction with several specific scenarios, after a main-standby relationship is introduced, and reference is made to Fig. 6B:

In a normal scenario, the clockwise direction is a normal working direction in the ring network by default, the AC side dual-homing component 52 is a main component, and in this case, the transmission path of the service data sent by the base station 202 to the RNC 204 is: base station 202->A->B->d->component 52->RNC204.

In the case of fault of the transmission link 26, the AC side dual-homing component 52 becomes a main component, and the transmission path of the service data sent by the base station 202 to the RNC 204 is: base station202->A->B->C->e->component 54-> component 52->RNC204.

In the case of failure of the transmission component d, the AC side dual-homing component 52 is still a main component, and the transmission path of the service data sent by the base station 202 to the RNC 204 is: base station202->A->B->C->e->component 54-> component 52->RNC204.

In the case of failure of the AC link 29, the AC side dual-homing component 52 is a standby component, and the transmission path of the service data sent by the base station 202 to the RNC 204 is: base station 202->A->B->d->component 52 -> component 54->RNC204.

To sum up, in the network protection method provided by the embodiment, by obtaining the service configuration information of the other off-ring node by one of the two off-ring nodes, when receiving the service data, detecting whether the service configuration information carried in the service data is matched with the service configuration information of the other off-ring node, and if the detection result is yes, deciding the off-ring policy of the service data, the problems that when the ring network protection and the dual-homing protection coexist, a longer holdoff time needs to be configured, and that the dual-homing protection needs to consume more OAM resources are solved; in the case where the dual-homing protection does not need to be specially provided and only the ring network protection needs to be provided, the protection effect same as that of the dual-homing protection may be achieved by the two off-ring nodes on the ring network voluntarily deciding the off-ring policy when receiving the service data of which the off-ring operation is performed at the opposite end off-ring node by default.

Moreover, since the dual-homing protection does not need to be specially deployed and only the ring network protection needs to be deployed, not only are configuration work and maintenance work greatly reduced, but also only one set of OAM based on the ring network needs to operated, thus very few OAM resources are occupied.

And, for data of one service, only one PW channel needs to be established, instead of establishing both a main PW channel and a standby PW channel for data of each service, and thus transmission resources are saved.

In addition, for one off-ring node, if the transmission component in the off-ring node is faulty, but the AC side dual-homing component may still work normally, an off-ring operation of the service data may be performed through the AC side dual-homing component of the off-ring node.

Apparatus embodiments of the present invention are described below, and for the parts not described in detail, reference may be made to the above-mentioned corresponding method embodiments.

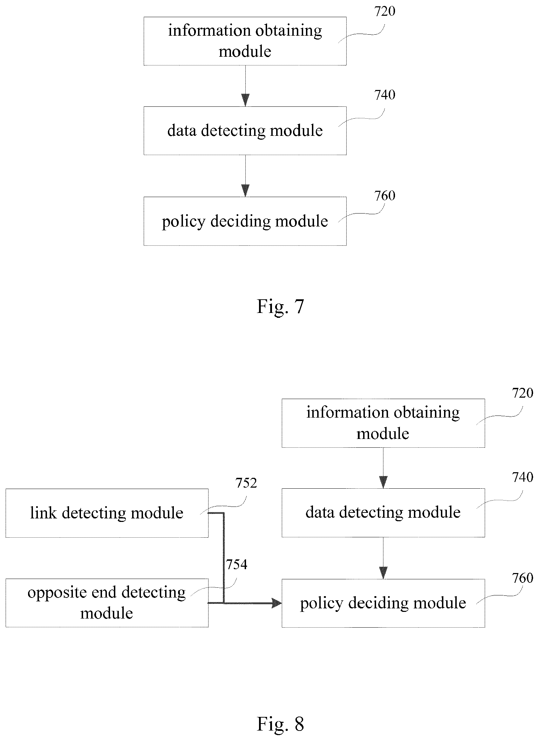

Referring to Fig. 7, it shows a structural block diagram of a network protection apparatus provided by an embodiment of the present invention. The network protection apparatus may be implemented as all or part of an off-ring node through software, hardware or a combination thereof, the off-ring node may be any of two off-ring nodes connected with a same access device on a ring network provided with ring network protection, the apparatus including:
an information obtaining module 720, configured to obtain service configuration information of the other off-ring node;
a data detecting module 740 configured to, when receiving service data, detect whether service configuration information carried in the service data is matched with the service configuration information of the other off-ring node; and
a policy deciding module 760 configured to, if the detection result is that the service configuration information carried in the service data is matched with the service configuration information of the other off-ring node, decide that an off-ring policy of the service data includes:
   performing an off-ring operation of the service data at the current off-ring node, and/or sending the service data to the other off-ring node to perform an off-ring operation.

To sum up, in the network protection method provided by the embodiment, by obtaining the service configuration information of the other off-ring node by one of the two off-ring nodes, when receiving the service data, detecting whether the service configuration information carried in the service data is matched with the service configuration information of the other off-ring node, and if the detection result is yes, deciding the off-ring policy of the service data, the problems that when the ring network protection and the dual-homing protection coexist, a longer holdoff time needs to be configured, and that the dual-homing protection needs to consume more OAM resources are solved; in the case where the dual-homing protection does not need to be specially provided and only the ring network protection needs to be provided, the protection effect same as that of the dual-homing protection may be achieved by the two off-ring nodes on the ring network voluntarily deciding the off-ring policy when receiving the service data of the opposite end off-ring node. Moreover, since the dual-homing protection does not need to be specially deployed and only the ring network protection needs to be deployed, only one set of OAM based on the ring network needs to operated, and thus very few OAM resources are occupied. Meanwhile, for data of one service, only one PW channel needs to be established, instead of establishing both a main PW channel and a standby PW channel for data of each service, and thus transmission resources are saved.

Referring to Fig. 8, it shows a structural block diagram of a network protection apparatus provided by another embodiment of the present invention. The network protection apparatus may be implemented as all or part of an off-ring node through software, hardware or a combination thereof, the off-ring node may be any of two off-ring nodes connected with a same access device on a ring network provided with ring network protection, the apparatus including:
an information obtaining module 720, configured to obtain service configuration information of the other off-ring node;
a data detecting module 740 configured to, when receiving service data, detect whether service configuration information carried in the service data is matched with the service configuration information of the other off-ring node; and
a policy deciding module 760 configured to, if the detection result is that the service configuration information carried in the service data is matched with the service configuration information of the other off-ring node, decide that an off-ring policy of the service data includes:
   performing an off-ring operation of the service data at the current off-ring node, and/or sending the service data to the other off-ring node to perform an off-ring operation.

Further, the information obtaining module 720 includes: a first obtaining unit or a second obtaining unit;
the first obtaining unit is configured to obtain the service configuration information of the other off-ring node from the other off-ring node; and
the second obtaining unit is configured to obtain the service configuration information of the other off-ring node from a network management system of the ring network.

Specifically, the first obtaining unit is configured to:
receive the service configuration information of the other off-ring node sent by the other off-ring node through a preset channel, wherein the preset channel is a channel established between the current off-ring node and the other off-ring node in advance;
   or
receive the service configuration information of the other off-ring node sent by the other off-ring node through an extension message of an operation administration and maintenance OAM mechanism on the ring network.

The network protection apparatus further includes: a link detecting module 752;
the link detecting module 752 is further configured to detect whether an access link between the current off-ring node and the access device is faulty; and
the policy deciding module 760 is configured to, if a detection result of the link detecting module 752 is that the access link is not faulty, execute the step of deciding that the off-ring policy of the service data includes performing the off-ring operation of the service data at the current off-ring node.

The policy deciding module 760 is further configured to, if the detection result of the link detecting module 752 is that the access link is faulty, send the service data to the other off-ring node to perform the off-ring operation.

The network protection apparatus further includes: an opposite end detecting module 754;
the opposite end detecting module 754 is configured to detect whether the other off-ring node is reachable; and
the policy deciding module 760 is configured to, if the detection result of the opposite end detecting module 754 is that the other off-ring node is reachable, execute the step of deciding that the off-ring policy includes sending the service data to the other off-ring node to perform an off-ring operation.

The opposite end detecting module 754 is configured to:
detect whether the other off-ring node is reachable through the operation administration and maintenance OAM mechanism on the ring network; or
determine whether the other off-ring node is reachable by detecting whether a preset channel is normal, wherein the preset channel is a channel established between the current off-ring node and the other off-ring node in advance; or
determine whether the other off-ring node is reachable by receiving a message sent by the other off-ring node through a preset channel, wherein the preset channel is a channel established between the current off-ring node and the other off-ring node in advance.

To sum up, according to the network protection apparatus provided by the embodiment, by obtaining the service configuration information of the other off-ring node by one of the two off-ring nodes, when receiving the service data, detecting whether the service configuration information carried in the service data is matched with the service configuration information of the other off-ring node, and if the detection result is yes, deciding the off-ring policy of the service data, the problems that when the ring network protection and the dual-homing protection coexist, a longer holdoff time needs to be configured, and that the dual-homing protection needs to consume more OAM resources are solved; in the case where the dual-homing protection does not need to be specially provided and only the ring network protection needs to be provided, the protection effect same as that of the dual-homing protection may be achieved by the two off-ring nodes on the ring network voluntarily deciding the off-ring policy when receiving the service data of which the off-ring operation is performed at the opposite end off-ring node by default.

Moreover, since the dual-homing protection does not need to be specially deployed and only the ring network protection needs to be deployed, not only are configuration work and maintenance work greatly reduced, but also only one set of OAM based on the ring network needs to be operated, thus very few OAM resources are occupied.

And, for data of one service, only one PW channel needs to be established, instead of establishing both a main PW channel and a standby PW channel for data of each service, and transmission resources are saved.

In addition, in different embodiments, the link detecting module and the opposite end detecting module may be absent, only include one or include two, the more the two modules include, the more complex the control logic of the network side is, but more redundant service data may be sent; the fewer the two modules include, the simpler the control logic of the network side is, but less redundant service data may be sent. In specific implementation, different policies may be adopted according to different implementation environments and the calculation capacity of the network side.

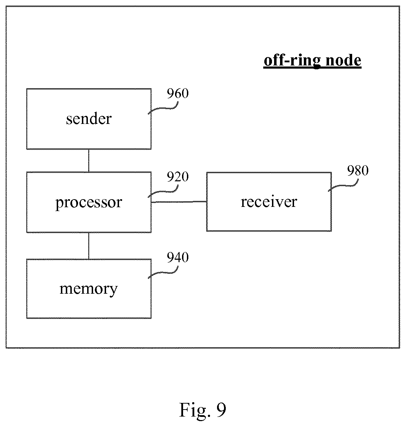

Referring to Fig. 9, it shows a structural block diagram of an off-ring node provided by an embodiment of the present invention. The off-ring node is any of two off-ring nodes connected with a same access device on a ring network provided with ring network protection. The off-ring node includes a processor 920, a memory 940, a sender 960 and a receiver 980.

The processor 920 is configured to obtain service configuration information of the other off-ring node through the receiver 980;
the processor 920 is further configured to, when the receiver 980 receives service data, detect whether service configuration information carried in the service data is matched with the service configuration information of the other off-ring node; and
the processor 920 is further configured to, if a detection result is that the service configuration information carried in the service data is matched with the service configuration information of the other off-ring node, decide that an off-ring policy of the service data includes:
performing an off-ring operation of the service data at the current off-ring node, and/or sending the service data to the other off-ring node through the sender 960 to perform an off-ring operation.

To sum up, according to the off-ring node provided by the embodiment, by obtaining the service configuration information of the other off-ring node by one of the two off-ring nodes, when receiving the service data, detecting whether the service configuration information carried in the service data is matched with the service configuration information of the other off-ring node, and if the detection result is yes, deciding the off-ring policy of the service data, the problems that when the ring network protection and the dual-homing protection coexist, a longer holdoff time needs to be configured, and that the dual-homing protection needs to consume more OAM resources are solved; in the case where the dual-homing protection does not need to be specially provided and only the ring network protection needs to be provided, the protection effect same as that of the dual-homing protection may be achieved by the two off-ring nodes on the ring network voluntarily deciding the off-ring policy when receiving the service data of which the off-ring operation is performed at the opposite end off-ring node by default.

Moreover, since the dual-homing protection does not need to be specially deployed and only the ring network protection needs to be deployed, not only are configuration work and maintenance work greatly reduced, but also only one set of OAM based on the ring network needs to operated, thus very few OAM resources are occupied.

In a more preferred embodiment provided on the basis of the embodiment shown in Fig. 9, the processor is further configured to:
obtain the service configuration information of the other off-ring node from the other off-ring node; or
obtain the service configuration information of the other off-ring node from a network management system of the ring network.

In a more preferred embodiment provided on the basis of the embodiment shown in Fig. 9, the processor is further configured to: receive the service configuration information of the other off-ring node sent by the other off-ring node through a preset channel, wherein the preset channel is a channel established between the current off-ring node and the other off-ring node in advance;
or
receive the service configuration information of the other off-ring node sent by the other off-ring node through an extension message of an operation administration and maintenance OAM mechanism on the ring network.

In a more preferred embodiment provided on the basis of the embodiment shown in Fig. 9, in the case where the deciding that an off-ring policy of the service data includes performing an off-ring operation of the service data at the current off-ring node, before the deciding that an off-ring policy of the service data includes performing the off-ring operation of the service data at the current off-ring node, the processor is further configured to:
detect whether an access link between the current off-ring node and the access device is faulty; and
if the detection result is that the access link is not faulty, execute the step of deciding that the off-ring policy of the service data includes performing the off-ring operation of the service data at the current off-ring node.

In a more preferred embodiment provided on the basis of the embodiment shown in Fig. 9, the processor is further configured to: if the detection result is that the access link is faulty, send the service data to the other off-ring node to perform the off-ring operation.

In a more preferred embodiment provided on the basis of the embodiment shown in Fig. 9, in the case where the deciding that an off-ring policy of the service data includes sending the service data to the other off-ring node to perform an off-ring operation, before the deciding that an off-ring policy of the service data includes sending the service data to the other off-ring node to perform an off-ring operation, the processor is further configured to:
detect whether the other off-ring node is reachable; and
if the detection result is that the other off-ring node is reachable, execute the step of deciding that the off-ring policy includes sending the service data to the other off-ring node to perform an off-ring operation.

In a more preferred embodiment provided on the basis of the embodiment shown in Fig. 9, the processor is further configured to:
detect whether the other off-ring node is reachable through the operation administration and maintenance OAM mechanism on the ring network; or
determine whether the other off-ring node is reachable by detecting whether a preset channel is normal, wherein the preset channel is a channel established between the current off-ring node and the other off-ring node in advance; or
determine whether the other off-ring node is reachable by receiving a message sent by the other off-ring node through a preset channel, wherein the preset channel is a channel established between the current off-ring node and the other off-ring node in advance.

In another embodiment of the present invention, a network system is further provided. The network system includes a ring network provided with ring network protection and two off-ring nodes connected with a same access device on the ring network; and
the off-ring node includes the network protection apparatus provided by the embodiment shown in Fig. 7 and the embodiment shown in Fig. 8.

Or the off-ring node is the off-ring node provided by the embodiment shown in Fig. 9 and the more preferred embodiment provided on the basis of the embodiment shown in Fig. 9.

The sequence numbers of the above embodiments of the present invention are only used for description instead of representing preference of the embodiments.

Those of ordinary skill in the art may understand that all or part of the steps in the above-mentioned embodiments may be implemented by hardware and may also be implemented by a program instructing relevant hardware, the program may be stored in a computer readable storage medium, and the above-mentioned storage medium may be a random access memory, a magnetic disk or an optical disk or the like.

The foregoing descriptions are merely preferred embodiments of the present invention, rather than limiting the present invention. Any modifications, equivalent substitutions, improvements and the like made within the principle of the present invention should be encompassed in the protection scope of the present invention.

## Claims

1. A network protection method, applied to any of two off-ring nodes connected with a same access device on a ring network provided with ring network protection, comprising:
obtaining (301) service configuration information of the other off-ring node;
when receiving service data, detecting (302) whether service configuration information carried in the service data is matched with the service configuration information of the other off-ring node; and
if a detection result is that the service configuration information carried in the service data is matched with the service configuration information of the other off-ring node, deciding (303) that an off-ring policy of the service data comprises:
performing an off-ring operation of the service data at the current off-ring node, and/or sending the service data to the other off-ring node to perform an off-ring operation.

2. The network protection method of claim 1, wherein the obtaining service configuration information of the other off-ring node comprises:
obtaining the service configuration information of the other off-ring node from the other off-ring node; or
obtaining the service configuration information of the other off-ring node from a network management system of the ring network.

3. The network protection method of claim 2, wherein the obtaining the service configuration information of the other off-ring node from the other off-ring node comprises:
receiving the service configuration information of the other off-ring node sent by the other off-ring node through a preset channel, wherein the preset channel is a channel established between the current off-ring node and the other off-ring node in advance;
or
receiving the service configuration information of the other off-ring node sent by the other off-ring node through an extension message of an operation administration and maintenance, OAM, mechanism on the ring network.

4. The network protection method of any of claims 1-3, wherein in the case where the deciding that an off-ring policy of the service data comprises performing an off-ring operation of the service data at the current off-ring node, before the deciding that an off-ring policy of the service data comprises performing an off-ring operation of the service data at the current off-ring node, the method further comprises:
detecting whether an access link between the current off-ring node and the access device is faulty; and
if a detection result is that the access link is not faulty, executing the step of deciding that the off-ring policy the service data comprises performing the off-ring operation of the service data at the current off-ring node.

5. The network protection method of any of claims 1-3, wherein in the case where the deciding that an off-ring policy of the service data comprises sending the service data to the other off-ring node to perform the off-ring operation, before the deciding that an off-ring policy of the service data comprises sending the service data to the other off-ring node to perform the off-ring operation, the method further comprises:
detecting whether the other off-ring node is reachable; and
if the detection result is that the other off-ring node is reachable, executing the step of deciding that the off-ring policy comprises sending the service data to the other off-ring node to perform the off-ring operation.

6. The network protection method of claim 5, wherein the detecting whether the other off-ring node is reachable comprises:
detecting whether the other off-ring node is reachable through an operation administration and maintenance, OAM, mechanism on the ring network; or
determining whether the other off-ring node is reachable by detecting whether a preset channel is normal, wherein the preset channel is a channel established between the current off-ring node and the other off-ring node in advance; or
determining whether the other off-ring node is reachable by receiving a message sent by the other off-ring node through a preset channel, wherein the preset channel is a channel established between the current off-ring node and the other off-ring node in advance.

7. A network protection apparatus, applied to any of two off-ring nodes connected with a same access device on a ring network provided with ring network protection, comprising:
an information obtaining module (720), configured to obtain service configuration information of the other off-ring node;
a data detecting module (740), configured to, when receiving service data, detect whether service configuration information carried in the service data is matched with the service configuration information of the other off-ring node; and
a policy deciding module (760) configured to, if the detection result is that the service configuration information carried in the service data is matched with the service configuration information of the other off-ring node, decide that an off-ring policy of the service data comprises:
performing an off-ring operation of the service data at the current off-ring node, and/or sending the service data to the other off-ring node to perform an off-ring operation.

8. The network protection method of claim 7, wherein the information obtaining module (720) comprises: a first obtaining unit or a second obtaining unit;
the first obtaining unit is configured to obtain the service configuration information of the other off-ring node from the other off-ring node; and
the second obtaining unit is configured to obtain the service configuration information of the other off-ring node from a network management system of the ring network.

9. The network protection method of claim 8, wherein the first obtaining unit is configured to:
receive the service configuration information of the other off-ring node sent by the other off-ring node through a preset channel, wherein the preset channel is a channel established between the current off-ring node and the other off-ring node in advance;
or
receive the service configuration information of the other off-ring node sent by the other off-ring node through an extension message of an operation administration and maintenance, OAM, mechanism on the ring network.

10. The network protection method of any of claims 7-9, further comprising: a link detecting module (752);
the link detecting module (752) is further configured to detect whether an access link between the current off-ring node and the access device is faulty; and
the policy deciding module (760) is configured to, if a detection result of the link detecting module (752) is that the access link is not faulty, execute the step of deciding that the off-ring policy of the service data comprises performing the off-ring operation of the service data at the current off-ring node.

11. The network protection method of claim 10, wherein the policy deciding module (760) is further configured to, if the detection result is that the access link is faulty, send the service data to the other off-ring node to perform the off-ring operation.

12. The network protection method of any of claims 8-10, further comprising: an opposite end detecting module (754), wherein
the opposite end detecting module (754) is configured to detect whether the other off-ring node is reachable; and
the policy deciding module (760) is configured to, if the detection result is that the other off-ring node is reachable, execute the step of deciding that the off-ring policy comprises sending the service data to the other off-ring node to perform the off-ring operation.

13. The network protection method of claim 12, wherein the opposite end detecting module (754) is configured to:
detect whether the other off-ring node is reachable through an operation administration and maintenance, OAM, mechanism on the ring network; or
determine whether the other off-ring node is reachable by detecting whether a preset channel is normal, wherein the preset channel is a channel established between the current off-ring node and the other off-ring node in advance; or
determine whether the other off-ring node is reachable by receiving a message sent by the other off-ring node through a preset channel, wherein the preset channel is a channel established between the current off-ring node and the other off-ring node in advance.

14. An off-ring node, comprising the network protection apparatus of any of claims 7-13.

15. A network system, comprising a ring network provided with ring network protection and two off-ring nodes connected with a same access device on the ring network, wherein
the off-ring node is the off-ring node of claim 14.

## Patentansprüche

1. Netzwerkschutzverfahren, das auf beliebige von zwei Außerringknoten angewandt wird, die mit einer selben Zugangsvorrichtung in einem Ringnetzwerk verbunden sind, das mit Ringnetzwerkschutz versehen ist, umfassend:
Erhalten (301) von Dienstkonfigurationsinformationen des anderen Außerringknotens;
Detektieren (302) beim Empfangen von Dienstdaten, ob in den Dienstdaten geführte Dienstkonfigurationsinformationen mit den Dienstkonfigurationsinformationen des anderen Außerringknotens abgestimmt sind; und
wenn ein Detektionsergebnis ist, dass die in den Dienstdaten geführten Dienstkonfigurationsinformationen mit den Dienstkonfigurationsinformationen des anderen Außerringknotens abgestimmt sind, Entscheiden (303), dass eine Außerringrichtlinie der Dienstdaten Folgendes umfasst:
Ausführen einer Außerringoperation der Dienstdaten in dem aktuellen Außerringknoten und/oder Senden der Dienstdaten zu dem anderen Außerringknoten, um eine Außerringoperation auszuführen.

2. Netzwerkschutzverfahren nach Anspruch 1, wobei das Erhalten von Dienstkonfigurationsinformationen des anderen Außerringknotens Folgendes umfasst:
Erhalten der Dienstkonfigurationsinformationen des anderen Außerringknotens von dem anderen Außerringknoten; oder
Erhalten der Dienstkonfigurationsinformationen des anderen Außerringknotens von einem Netzwerkverwaltungssystem des Ringnetzwerks.

3. Netzwerkschutzverfahren nach Anspruch 2, wobei das Erhalten der Dienstkonfigurationsinformationen des anderen Außerringknotens von dem anderen Außerringknoten Folgendes umfasst:
Empfangen der Dienstkonfigurationsinformationen des anderen Außerringknotens, die durch den anderen Außerringknoten mittels eines voreingestellten Kanals gesendet werden, wobei der voreingestellte Kanal ein zwischen dem aktuellen Außerringknoten und dem anderen Außerringknoten im Voraus hergestellter Kanal ist;
oder
Empfangen der Dienstkonfigurationsinformationen des anderen Außerringknotens, die durch den anderen Außerringknoten mittels einer Erweiterungsnachricht eines "Operation Administration and Maintenance"- bzw. OAM-Mechanismus in dem Ringnetzwerk gesendet werden.

4. Netzwerkschutzverfahren nach einem der Ansprüche 1-3, wobei im Fall des Entscheidens, dass eine Außerringrichtlinie der Dienstdaten Ausführen einer Außerringoperation der Dienstdaten in dem aktuellen Außerringknoten umfasst, das Verfahren vor dem Entscheiden, dass eine Außerringrichtlinie der Dienstdaten Ausführen einer Außerringoperation der Dienstdaten in dem aktuellen Außerringknoten umfasst, ferner Folgendes umfasst:
Detektieren, ob eine Zugangsstrecke zwischen dem aktuellen Außerringknoten und der Zugangsvorrichtung fehlerhaft ist; und
wenn ein Detektionsergebnis ist, dass die Zugangsstrecke nicht fehlerhaft ist, Ausführen des Schritts des Entscheidens, dass die Außerringrichtlinie der Dienstdaten Ausführen der Außerringoperation der Dienstdaten in dem aktuellen Außerringknoten umfasst.

5. Netzwerkschutzverfahren nach einem der Ansprüche 1-3, wobei im Fall des Entscheidens, dass eine Außerringrichtlinie der Dienstdaten Senden der Dienstdaten zu dem anderen Außerringknoten zur Ausführung der Außerringoperation umfasst, das Verfahren vor dem Entscheiden, dass eine Außerringrichtlinie der Dienstdaten Senden der Dienstdaten zu dem anderen Außerringknoten zum Ausführen der Außerringoperation umfasst, ferner Folgendes umfasst:
Detektieren, ob der andere Außerringknoten erreichbar ist; und
wenn das Detektionsergebnis ist, dass der andere Außerringknoten erreichbar ist, Ausführen des Schritts des Entscheidens, dass die Außerringrichtlinie Senden der Dienstdaten zu dem anderen Außerringknoten zum Ausführen der Außerringoperation umfasst.

6. Netzwerkschutzverfahren nach Anspruch 5, wobei das Detektieren, ob der andere Außerringknoten erreichbar ist, Folgendes umfasst:
Detektieren, ob der andere Außerringknoten erreichbar ist, mittels eines "Operation Administration and Maintenance"- bzw. OAM-Mechanismus in dem Ringnetzwerk; oder
Bestimmen, ob der andere Außerringknoten erreichbar ist, durch Detektieren, ob ein voreingestellter Kanal normal ist, wobei der voreingestellte Kanal ein zwischen dem aktuellen Außerringknoten und dem anderen Außerringknoten im Voraus hergestellter Kanal ist; oder
Bestimmen, ob der andere Außerringknoten erreichbar ist, durch Empfangen einer Nachricht, die durch den anderen Außerringknoten mittels eines voreingestellten Kanals gesendet wird, wobei der voreingestellte Kanal ein zwischen dem aktuellen Außerringknoten und dem anderen Außerringknoten im Voraus hergestellter Kanal ist.

7. Netzwerkschutzvorrichtung, die auf beliebige von zwei Außerringknoten angewandt wird, die mit einer selben Zugangsvorrichtung in einem Ringnetzwerk verbunden sind, das mit Ringnetzwerkschutz versehen ist, umfassend:
ein Informationserhaltemodul (720), ausgelegt zum Erhalten von Dienstkonfigurationsinformationen des anderen Außerringknotens;
ein Datendetektionsmodul (740), ausgelegt zum Detektieren beim Empfangen von Dienstdaten, ob in den Dienstdaten geführte Dienstkonfigurationsinformationen mit den Dienstkonfigurationsinformationen des anderen Außerringknotens abgestimmt sind; und
ein Richtlinienentscheidungsmodul (760), ausgelegt zum Entscheiden, dass eine Außerringrichtlinie der Dienstdaten, wenn das Detektionsergebnis ist, dass die in den Dienstdaten geführten Dienstkonfigurationsinformationen mit den Dienstkonfigurationsinformationen des anderen Außerringknotens abgestimmt sind, Folgendes umfasst:
Ausführen einer Außerringoperation der Dienstdaten in dem aktuellen Außerringknoten und/oder Senden der Dienstdaten zu dem anderen Außerringknoten, um eine Außerringoperation auszuführen.

8. Netzwerkschutzverfahren nach Anspruch 7, wobei das Informationserhaltemodul (720) eine erste Erhalteeinheit oder eine zweite Erhalteeinheit umfasst;
die erste Erhalteeinheit ausgelegt ist zum Erhalten der Dienstkonfigurationsinformationen des anderen Außerringknotens von dem anderen Außerringknoten; und
die zweite Erhalteeinheit ausgelegt ist zum Erhalten der Dienstkonfigurationsinformationen des anderen Außerringknotens von einem Netzwerkverwaltungssystem des Ringnetzwerks.

9. Netzwerkschutzverfahren nach Anspruch 8, wobei die erste Erhalteeinheit ausgelegt ist zum:
Empfangen der Dienstkonfigurationsinformationen des anderen Außerringknotens, die durch den anderen Außerringknoten mittels eines voreingestellten Kanals gesendet werden, wobei der voreingestellte Kanal ein zwischen dem aktuellen Außerringknoten und dem anderen Außerringknoten im Voraus hergestellter Kanal ist;
oder
Empfangen der Dienstkonfigurationsinformationen des anderen Außerringknotens, die durch den anderen Außerringknoten mittels einer Erweiterungsnachricht eines "Operation Administration and Maintenance"- bzw. OAM-Mechanismus in dem Ringnetzwerk gesendet werden.

10. Netzwerkschutzverfahren nach einem der Ansprüche 7-9, das ferner ein Streckendetektionsmodul (752) umfasst;
wobei das Streckendetektionsmodul (752) ferner ausgelegt ist zum Detektieren, ob eine Zugangsstrecke zwischen dem aktuellen Außerringknoten und der Zugangsvorrichtung fehlerhaft ist; und
das Richtlinienentscheidungsmodul (760) ausgelegt ist zum Ausführen des Schritts des Entscheidens, dass die Außerringrichtlinie der Dienstdaten Ausführen der Außerringoperation der Dienstdaten in dem aktuellen Außerringknoten umfasst, wenn ein Detektionsergebnis des Streckendetektionsmoduls (752) ist, dass die Zugangsstrecke nicht fehlerhaft ist.

11. Netzwerkschutzverfahren nach Anspruch 10, wobei das Richtlinienentscheidungsmodul (760) ferner ausgelegt ist zum Senden der Dienstdaten zu dem anderen Außerringknoten zum Ausführen der Außerringoperation, wenn das Detektionsergebnis ist, dass die Zugangsstrecke fehlerhaft ist.

12. Netzwerkschutzverfahren nach einem der Ansprüche 8-10, das ferner ein Detektionsmodul (754) des entgegengesetzten Endes umfasst, wobei
das Detektionsmodul (754) des entgegengesetzten Endes ausgelegt ist zum Detektieren, ob der andere Außerringknoten erreichbar ist; und
das Richtlinienentscheidungsmodul (760) ausgelegt ist zum Ausführen des Schritts des Entscheidens, dass die Außerringrichtlinie Senden der Dienstdaten zu dem anderen Außerringknoten zum Ausführen der Außerringoperation umfasst, wenn das Detektionsergebnis ist, dass der andere Außerringknoten erreichbar ist.

13. Netzwerkschutzverfahren nach Anspruch 12, wobei das Detektionsmodul (754) des entgegengesetzten Endes ausgelegt ist zum:
Detektieren, ob der andere Außerringknoten erreichbar ist, mittels eines "Operation Administration and Maintenance"- bzw. OAM-Mechanismus in dem Ringnetzwerk; oder
Bestimmen, ob der andere Außerringknoten erreichbar ist, durch Detektieren, ob ein voreingestellter Kanal normal ist, wobei der voreingestellte Kanal ein zwischen dem aktuellen Außerringknoten und dem anderen Außerringknoten im Voraus hergestellter Kanal ist; oder
Bestimmen, ob der andere Außerringknoten erreichbar ist, durch Empfangen einer Nachricht, die durch den anderen Außerringknoten mittels eines voreingestellten Kanals gesendet wird, wobei der voreingestellte Kanal ein zwischen dem aktuellen Außerringknoten und dem anderen Außerringknoten im Voraus hergestellter Kanal ist.

14. Außerringknoten, der die Netzwerkschutzvorrichtung nach einem der Ansprüche 7-13 umfasst.

15. Netzwerksystem, das ein mit Ringnetzwerkschutz versehenes Ringnetzwerk und zwei Außerringknoten, die mit einer selben Zugangsvorrichtung in dem Ringnetzwerk verbunden sind, umfasst, wobei
der Außerringknoten der Außerringknoten von Anspruch 14 ist.

## Revendications

1. Procédé de protection de réseau, appliqué à n'importe quels deux noeuds hors anneau connectés à un même dispositif d'accès sur un même réseau en anneau doté d'une protection de réseau en anneau, comprenant :
l'obtention (301) d'informations de configuration de service de l'autre noeud hors anneau ;
à la réception de données de services, la détection (302) que les informations de configuration de service incluses dans les données de service correspondent ou non aux informations de configuration de service de l'autre noeud hors anneau ; et
si un résultat de détection est que les informations de configuration de service incluses dans les données de service correspondent aux informations de configuration de service de l'autre noeud hors anneau, la décision (303) qu'une stratégie hors anneau des données de service comprend :
l'exécution d'une opération hors anneau des données de service au niveau du noeud hors anneau actuel, et/ou l'envoi des données de service à l'autre noeud hors anneau pour exécuter une opération hors anneau.

2. Procédé de protection de réseau selon la revendication 1, dans lequel l'obtention des informations de configuration de service de l'autre noeud hors anneau comprend :
l'obtention des informations de configuration de service de l'autre noeud hors anneau depuis l'autre noeud hors anneau ; ou
l'obtention des informations de configuration de service de l'autre noeud hors anneau depuis un système de gestion de réseau du réseau en anneau.

3. Procédé de protection de réseau selon la revendication 2, dans lequel l'obtention des informations de configuration de service de l'autre noeud hors anneau depuis l'autre noeud hors anneau comprend :
la réception des informations de configuration de service de l'autre noeud hors anneau envoyées par l'autre noeud hors anneau par le biais d'un canal prédéfini, dans lequel le canal prédéfini est un canal établi à l'avance entre le noeud hors anneau actuel et l'autre noeud hors anneau ;
ou
la réception des informations de configuration de service de l'autre noeud hors anneau envoyées par l'autre noeud hors anneau par le biais d'un message d'extension d'un mécanisme d'opérations, d'administration et de maintenance, OAM, sur le réseau en anneau.

4. Procédé de protection de réseau selon l'une quelconque des revendications 1 à 3, comprenant en outre, dans le cas où la décision qu'une stratégie hors anneau des données de service comprend l'exécution d'une opération hors anneau des données de service au niveau du noeud hors anneau actuel, avant la décision qu'une stratégie hors anneau des données de service comprend l'exécution d'une opération hors anneau des données de services au niveau du noeud hors anneau actuel :
la détection qu'une liaison d'accès entre le noeud hors anneau actuel et le dispositif d'accès est défectueuse ou non ; et
si un résultat de détection est que la liaison d'accès n'est pas défectueuse, l'exécution de l'étape de décision que la stratégie hors anneau des données de service comprend l'exécution de l'opération hors anneau des données de services au niveau du noeud hors anneau actuel.

5. Procédé de protection de réseau selon l'une quelconque des revendications 1 à 3, comprenant en outre, dans le cas où la décision qu'une stratégie hors anneau des données de service comprend l'envoi des données de service à l'autre noeud hors anneau pour l'exécution de l'opération hors anneau, avant la décision qu'une stratégie hors anneau des données de service comprend l'envoi des données de service à l'autre noeud hors anneau pour l'exécution de l'opération hors anneau :
la détection que l'autre noeud hors anneau est joignable ou non ; et
si le résultat de détection est que l'autre noeud hors anneau est joignable, l'exécution de l'étape de décision que la stratégie hors anneau comprend l'envoi des données de service à l'autre noeud hors anneau pour l'exécution de l'opération hors anneau.

6. Procédé de protection de réseau selon la revendication 5, dans lequel la détection que l'autre noeud hors anneau est joignable ou non comprend :
la détection que l'autre noeud hors anneau est joignable ou non par le biais d'un mécanisme d'opérations, d'administration et de maintenance, OAM, du réseau en anneau ; ou
la détermination que l'autre noeud hors anneau est joignable ou non en détectant qu'un canal prédéfini est normal ou non, dans lequel le canal prédéfini est un canal établi à l'avance entre le noeud hors anneau actuel et l'autre noeud hors anneau ; ou
la détermination que l'autre noeud hors anneau est joignable ou non en recevant un message envoyé par l'autre noeud hors anneau par le biais d'un canal prédéfini, dans lequel le canal prédéfini est un canal établi à l'avance entre le noeud hors anneau actuel et l'autre noeud hors anneau.

7. Appareil de protection de réseau, appliqué à n'importe quels deux noeuds hors anneau connectés à un même dispositif d'accès sur un même réseau en anneau doté d'une protection de réseau en anneau, comprenant :
un module d'obtention d'informations (720), configuré pour obtenir des informations de configuration de service de l'autre noeud hors anneau ;
un module de détection de données (740), configuré pour, à la réception de données de service, détecter que les informations de configuration de service incluses dans les données de service correspondent ou non aux informations de configuration de service de l'autre noeud hors anneau ; et
un module de décision de stratégie (760) configuré pour, si le résultat de détection est que les informations de configuration de service incluses dans les données de service correspondent aux informations de configuration de service de l'autre noeud hors anneau, décider qu'une stratégie hors anneau des données de service comprend :
l'exécution d'une opération hors anneau des données de services au niveau du noeud hors anneau actuel, et/ou l'envoi des données de service à l'autre noeud hors anneau pour exécuter une opération hors anneau.

8. Procédé de protection de réseau selon la revendication 7, dans lequel le module d'obtention d'informations (720) comprend : une première unité d'obtention ou une seconde unité d'obtention ;
la première unité d'obtention est configurée pour obtenir les informations de configuration de service de l'autre noeud hors anneau depuis l'autre noeud hors anneau ; et
la seconde unité d'obtention est configurée pour obtenir les informations de configuration de service de l'autre noeud hors anneau depuis un système de gestion de réseau du réseau en anneau.

9. Procédé de protection de réseau selon la revendication 8, dans lequel la première unité d'obtention est configurée pour :
recevoir les informations de configuration de service de l'autre noeud hors anneau envoyées par l'autre noeud hors anneau par le biais d'un canal prédéfini, dans lequel le canal prédéfini est un canal établi à l'avance entre le noeud hors anneau actuel et l'autre noeud hors anneau ;
ou
recevoir les informations de configuration de service de l'autre noeud hors anneau envoyées par l'autre noeud hors anneau par le biais d'un message d'extension d'un mécanisme d'opérations, d'administration et de maintenance, OAM, sur le réseau en anneau.

10. Procédé de protection de réseau selon l'une quelconque des revendications 7 à 9, comprenant en outre : un module de détection de liaison (752) ;
le module de détection de liaison (752) est configuré en outre pour détecter qu'une liaison d'accès entre le noeud hors anneau actuel et le dispositif d'accès est défectueuse ou non ; et
le module de décision de stratégie (760) est configuré pour, si un résultat de détection du module de détection de liaison (752) est que la liaison d'accès n'est pas défectueuse, exécuter l'étape de décision que la stratégie hors anneau des données de service comprend l'exécution de l'opération hors anneau des données de service au niveau d'un noeud hors anneau actuel.

11. Procédé de protection de réseau selon la revendication 10, dans lequel le module de décision de stratégie (760) est en outre configuré pour, si le résultat de détection est que la liaison d'accès est défectueuse, envoyer les données de service à l'autre noeud hors anneau pour l'exécution de l'opération hors anneau.

12. Procédé de protection de réseau selon l'une quelconque des revendications 8 à 10, comprenant en outre : un module de détection d'extrémité opposée (754), dans lequel
le module de détection d'extrémité opposée (754) est configuré pour détecter que l'autre noeud hors anneau est joignable ou non ; et
le module de décision de stratégie (760) est configuré pour, si le résultat de détection est que l'autre noeud hors anneau est joignable, exécuter l'étape de décision que la stratégie hors anneau comprend l'envoi des données de service à l'autre noeud hors anneau pour l'exécution de l'opération hors anneau.

13. Procédé de protection de réseau selon la revendication 12, dans lequel le module de détection d'extrémité opposée (754) est configuré pour :
détecter que l'autre noeud hors anneau est joignable ou non par le biais d'un mécanisme d'opérations, d'administration et de maintenance, OAM, sur le réseau en anneau ; ou
déterminer que l'autre noeud hors anneau est joignable ou non en détectant qu'un canal prédéfini est normal ou non, dans lequel le canal prédéfini est un canal établi à l'avance entre le noeud hors anneau actuel et l'autre noeud hors anneau ; ou déterminer que l'autre noeud hors anneau est joignable ou non en recevant un message envoyé par l'autre noeud hors anneau par le biais d'un canal prédéfini, dans lequel le canal prédéfini est un canal établi à l'avance entre le noeud hors anneau actuel et l'autre noeud hors anneau.

14. Noeud hors anneau, comprenant l'appareil de protection de réseau selon l'une quelconque des revendications 7 à 13.

15. Système de réseau, comprenant un réseau en anneau doté d'une protection de réseau en anneau et deux noeuds hors anneau connectés à un même dispositif d'accès sur le réseau en anneau, dans lequel le noeud hors anneau est le noeud hors anneau de la revendication 14.
